# FASCICULE DE BREVET EUROPEEN

(11) **EP 2 062 511 B1**
(45) Date de publication et mention de la délivrance du brevet: **22.06.2011**
(21) Numéro de dépôt: 08169102.4
(22) Date de dépôt: 14.11.2008
(51) Int. Cl.: A47J 27/20

(54) **Unité empilable**
Stapelbare Einheit
Stackable unit

(30) Priorité: 23.11.2007 FR 0708225
(43) Date de publication de la demande: 27.05.2009
(73) Titulaire: Armor Inox, 56430 Mauron (FR)
(72) Inventeur: Cadoret, Bernard, 56430 MAURON (FR); Marquet, Olivier, 56430, MAURON (FR)
(74) Mandataire: Maillet, Alain

(56) Documents cités:
- WO-A-97/34494
- FR-A- 2 754 677
- FR-A- 2 882 630

## Description

La présente invention concerne une unité empilable comprenant au moins une goulotte destinée à contenir un produit alimentaire tel que du jambon pendant sa cuisson.

Il est connu, pour mener la cuisson industrielle du jambon, de le cuire dans une enceinte de cuisson de volume relativement important. Les jambons sont enveloppés respectivement dans des poches de cuisson qu'il convient de disposer dans des goulottes d'une unité empilable.

Lorsque cette première unité empilable est remplie, elle sert de support à d'autres unités empilables qu'il convient alors de remplir puis d'empiler successivement les unes sur les autres pour former une pile qui est ensuite transférée dans une enceinte de cuisson.

Chaque unité empilable comprend un cadre dont les côtés sont constitués de deux profilés transversaux disposés en vis-à-vis et deux profilés longitudinaux disposés en vis-à-vis. Les profilés transversaux et les profilés longitudinaux sont réunis par leurs extrémités de manière à former le cadre.

Chaque goulotte ouverte vers le haut est montée à l'intérieur du cadre de telle manière que son axe longitudinal soit parallèle aux profilés longitudinaux. Chaque goulotte s'étend entre les deux profilés transversaux et chaque extrémité de chaque goulotte est fixée à l'un des profilés transversaux.

Sous chaque goulotte est fixé un couvercle ouvert vers le bas qui est monté à l'intérieur du cadre de telle manière que son axe longitudinal soit parallèle aux profilés longitudinaux. Chaque couvercle s'étend entre les deux profilés transversaux. Chaque couvercle est fixé à la goulotte qui le surplombe par l'intermédiaire de tôles de liaison.

Ainsi, lorsque deux unités empilables sont superposées, chaque couvercle de l'unité empilable supérieure vient fermer une goulotte de l'unité empilable inférieure de manière à former un moule à l'intérieur duquel est disposé le jambon à cuire.

Pour obtenir des jambons de section constante tout le long de l'axe longitudinal, il est nécessaire de garantir que chaque moule ainsi formé conserve une section constante tout le long de l'axe longitudinal, c'est-à-dire que la distance entre le fond d'une goulotte et son couvercle reste constante.

Lorsque les goulottes sont de longueur réduite, la rigidité du cadre assure cette constance.

Mais de plus en plus, là longueur des goulottes s'accroît. Le cadre n'assure plus la rigidité nécessaire pour conserver cette distance constante tout le long des goulottes. En particulier, les profilés longitudinaux pourraient flamber sous le poids des jambons. En outre, dans le cas d'une unité empilable de l'état de la technique, chaque profilé longitudinal est généralement constitué d'une tôle pliée, et le contact entre deux tôles pliées superposées ne permet pas de garantir une section constante du jambon sur toute sa longueur. Le document FR-A-2 754 677 présente une unité empilable.

Un objet de la présente invention est de proposer une unité empilable qui ne présente pas les inconvénients de l'art antérieur et qui en particulier permet de conserver une section constante entre la goulotte d'une unité empilable inférieure et le couvercle de l'unité empilable juste supérieure.

A cet effet, est proposée une unité empilable comprenant:
- deux profilés longitudinaux,
- deux profilés transversaux réunis aux profilés longitudinaux pour réaliser un cadre,
- au moins une goulotte dont l'axe longitudinal est parallèle aux profilés longitudinaux et dont chaque extrémité est fixée aux profilés transversaux, et
- sous chaque goulotte est fixé un couvercle, dont l'axe longitudinal est parallèle aux profilés longitudinaux de manière à ce que lorsque l'unité empilable est empilée sur une autre unité empilable identique, chaque couvercle de ladite unité empilable vient couvrir une goulotte de l'unité empilable inférieure,
l'unité empilable étant caractérisée en ce qu'elle comprend au moins deux colonnettes verticales réparties et fixées sur chaque profilé longitudinal, la face supérieure de chaque colonnette servant d'appui à la surface inférieure d'une colonnette d'une unité empilable supérieure, et, la face inférieure de chaque colonnette venant en appui sur la face supérieure d'une colonnette de l'unité empilable inférieure ou sur un plancher.

Avantageusement, chaque profilé longitudinal a une section en 'C' et chaque colonnette est fixée à chaque extrémité horizontale dudit profilé longitudinal.

Avantageusement, l'unité empilable comprend au moins deux plots d'alignement et, pour chaque plot d'alignement, un orifice d'alignement, chaque plot d'alignement étant prévu pour s'insérer dans un orifice d'alignement d'une deuxième unité empilable lors de l'empilement, et, chaque orifice d'alignement étant prévu pour recevoir un plot d'alignement d'une troisième unité empilable lors de l'empilement.

Avantageusement, chaque plot d'alignement prend la forme d'un cylindre vertical dont la base est fixée sur le cadre et dont l'extrémité libre est conique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente deux unités empilables selon l'invention,
la Fig. 2 représente une coupe par un plan vertical des unités empilables de la Fig. 1,
la Fig. 3 représente une unité empilable selon un autre mode de réalisation de l'invention,
la Fig. 4 représente une unité empilable selon un autre mode de réalisation de l'invention,et
la Fig. 5 représente une unité empilable selon un autre mode de réalisation de l'invention.

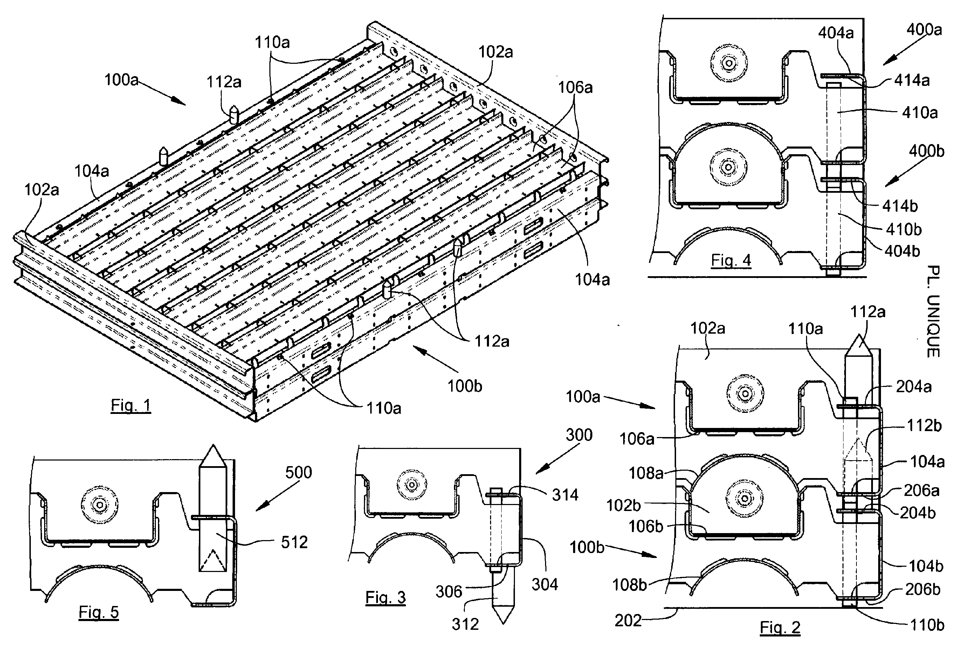

La description qui suit est basée sur la Fig. 1 qui montre un empilement de deux unités empilables 100a et 100b identiques. L'unité empilable 100a est l'unité empilable supérieure et l'unité empilable 100b est l'unité empilable inférieure qui se trouve juste au-dessous de l'unité empilable supérieure 100a.

Les deux unités empilables 100a et 100b sont identiques et les différents éléments les constituant portent les mêmes références indicées par la lettre 'a' ou la lettre 'b', si l'élément considéré appartient à l'unité empilable supérieure 100a ou à l'unité empilable inférieure 100b.

La structure de toutes les unités empilables est identique et seule la structure de l'unité empilable supérieure 100a est décrite.

L'unité empilable 100a est constituée d'un cadre qui est réalisé par assemblage de deux profilés longitudinaux 104a et de deux profilés transversaux 102a. Le cadre est rectangulaire et à l'intérieur de celui-ci est disposée au moins une goulotte 106a destinée à réceptionner le jambon à cuire. Les profilés longitudinaux 104a peuvent être constitués d'une tôle pliée. Comme cela est mieux vu sur la Fig. 2, chaque goulotte 106a présente une section en U ouverte vers le haut dont l'axe longitudinal est parallèle aux profilés longitudinaux 104a et dont chaque extrémité est fixée aux profilés transversaux 102a. A l'intérieur du cadre est également fixé, sous chaque goulotte 106a, un couvercle 108a. La fixation du couvercle 108a sous la goulotte 106a est assurée ici par l'intermédiaire d'une tôle de liaison. Chaque couvercle 108a est aligné sous une goulotte 106a, et présente une section en U ouverte vers le bas. L'axe longitudinal de chaque couvercle 108a est parallèle aux profilés longitudinaux 104a. Ainsi, lorsque l'unité empilable supérieure 100a est empilée sur l'unité empilable inférieure 100b, chaque couvercle 108a de l'unité empilable supérieure 100a vient couvrir une goulotte 106b de l'unité empilable inférieure 100b.

Pour éviter le flambage des profilés longitudinaux 104a sous le poids des jambons stockés dans les goulottes 106a, l'unité empilable 100a comprend au moins deux colonnettes verticales 110a réparties et fixées sur chaque profilé longitudinal 104a. La face inférieure de chaque colonnette 110a vient en appui sur la face supérieure d'une colonnette 110b de l'unité empilable inférieure 100b. La face inférieure de chaque colonnette 110b vient en appui sur un plancher 202 pour l'unité empilable 100b la plus basse. Dans le cas où une troisième unité empilable supérieure est empilée sur l'unité empilable 100a, la face supérieure de chaque colonnette 110a sert d'appui à la surface inférieure d'une colonnette de cette troisième unité empilable supérieure.

Comme cela est montré pour chaque colonnette 110b de l'unité empilable inférieure 100b qui sert d'appui à la surface inférieure d'une colonnette 110a de l'unité empilable supérieure 100a, un tel arrangement permet un transfert des efforts directement à travers les colonnettes 110a et 110b jusqu'à un plancher 202 qui peut être le fond d'une enceinte de cuisson ou le sol.

La répartition de chaque colonnette 110a, 110b est telle que l'espacement entre chaque colonnette 110a, 110b ne permet pas le flambage des profilés longitudinaux 104a. Dans le mode de réalisation proposé, les profilés longitudinaux 104a ont une longueur par exemple de 3 m et il y 5 colonnettes réparties sur chaque profilé longitudinal 104a.

La longueur et le positionnement vertical de chaque colonnette 110a, 110b sont tels que les profilés transversaux 102a et 102b, de deux unités empilables 100a et 100b empilées l'une sur l'autre, ne sont pas en contact. L'appui de chaque unité empilable supérieure 100a sur l'unité empilable inférieure 100b, ainsi que sa mise en butée, sont réalisés par les mêmes composants, à savoir les colonnettes 110a et 110b.

Du fait du non flambage des profilés longitudinaux 104a, la section de chaque moule à jambon constituée par la goulotte 106b de l'unité empilable inférieure 100b et le couvercle 108a de l'unité empilable supérieure 100a est constante sur toute la longueur.

Dans le mode de réalisation présenté sur les Figs., chaque profilé longitudinal 104a a une section en 'C' définie par une extrémité supérieure horizontale 204a et une extrémité inférieure horizontale 206a, cette géométrie permettant d'augmenter la rigidité du profilé longitudinal 104a. Chaque colonnette 110a est fixée à l'extrémité supérieure horizontale 204a et à l'extrémité inférieure horizontale 206a du profilé longitudinal 104a. Cette structure permet d'obtenir une grande rigidité de la colonnette 110a et un positionnement précis.

De la même manière, la colonnette 110b de l'unité empilable inférieure 100b est fixée à l'extrémité supérieure horizontale 204b et à l'extrémité inférieure horizontale 206b du profilé longitudinal 104b de section en 'C'.

Pour assurer que l'unité empilable supérieure 100a s'aligne avec l'unité empilable inférieure 100b lors de l'empilement, l'unité empilable inférieure 100b comprend au moins deux plots d'alignement 112b et, pour chaque plot d'alignement 112b, l'unité empilable supérieure 100a comprend un orifice d'alignement. Chaque plot d'alignement 112b de l'unité empilable inférieure 100b est prévu pour s'insérer dans l'un des orifices d'alignement de l'unité empilable supérieure 100a.

Dans le mode de réalisation représenté sur la Fig. 2, chaque plot d'alignement 112a prend la forme d'un cylindre vertical dont la base est fixée sur le cadre et dont l'extrémité libre est conique pour faciliter la pénétration et l'alignement de l'unité empilable supérieure.

Pour une même unité empilable 100a, la base du plot d'alignement 112a est fixée sur un profilé longitudinal 104a et, en particulier, sur l'extrémité supérieure horizontale 204a et s'étend verticalement vers le haut, et l'orifice d'alignement est réalisé dans l'extrémité inférieure horizontale 206a.

Dans le mode de réalisation représenté sur la Fig. 3, pour une même unité empilable 300 comprenant un profilé longitudinal 304, chaque plot d'alignement 312 est fixé sur l'extrémité inférieure horizontale 306 du profilé longitudinal 304 et s'étend verticalement vers le bas. L'orifice d'alignement est réalisé dans l'extrémité supérieure horizontale 314 du profilé longitudinal 304.

Ainsi, d'une manière générale, chaque unité empilable 100a, 300 comprend au moins deux plots d'alignement 112a, 312 et, pour chaque plot d'alignement 112a, 312 un orifice d'alignement, chaque plot d'alignement 112a, 312 étant prévu pour s'insérer dans un orifice d'alignement d'une deuxième unité empilable (inférieure ou supérieure) lors de l'empilement, et, chaque orifice d'alignement étant prévu pour recevoir un plot d'alignement d'une troisième unité empilable (supérieure ou inférieure) lors de l'empilement.

Dans le mode de réalisation représenté sur la Fig. 4, pour une même unité empilable 400a comprenant un profilé longitudinal 404a, chaque colonnette 410a sert également de plot d'alignement. Par exemple, à cette fin, il est possible de raccourcir l'extrémité supérieure de chaque colonnette 410a en deçà de l'extrémité supérieure horizontale 414a du profilé longitudinal 404a et de rallonger d'autant l'extrémité inférieure de chaque colonnette 410a. L'extrémité inférieure de chaque colonnette 410a s'insère dans un orifice d'alignement dans l'extrémité supérieure horizontale 414b du profilé longitudinal 404b de l'unité empilable 400b juste inférieure et jusqu'à venir en contact avec l'extrémité supérieure de la colonnette 410b de ladite unité empilable 400b juste inférieure.

Dans le mode de réalisation représenté sur la Fig. 5, pour une même unité empilable 500, chaque plot d'alignement 512 sert également de colonnette. L'alignement peut par exemple être assuré par l'extrémité inférieure de chaque plot d'alignement 512 présentant un évidement conique qui s'emmanche sur l'extrémité supérieure d'un plot d'alignement d'une unité empilable juste inférieure. A cette fin, l'extrémité supérieure de chaque plot d'alignement 512 présente une forme conique adaptée à l'évidement conique.

Bien entendu, la présente invention n'est pas limitée aux exemples et modes de réalisation décrits et représentés, mais elle est susceptible de nombreuses variantes accessibles à l'homme de l'art.

## Revendications

1. Unité empilable (100a) comprenant:
- deux profilés longitudinaux (104a),
- deux profilés transversaux (102a) réunis aux profilés longitudinaux (104a) pour réaliser un cadre,
- au moins une goulotte (106a) dont l'axe longitudinal est parallèle aux profilés longitudinaux (104a) et dont chaque extrémité est fixée aux profilés transversaux (102a), et
- sous chaque goulotte (106a) est fixé un couvercle (108a), dont l'axe longitudinal est parallèle aux profilés longitudinaux (104a) de manière à ce que lorsque l'unité empilable (100a) est empilée sur une autre unité empilable (100b) identique, chaque couvercle (108a) de ladite unité empilable (100a) vient couvrir une goulotte (106b) de l'unité empilable inférieure (100b),
l'unité empilable (100a) étant **caractérisée en ce qu'**elle comprend au moins deux colonnettes verticales (110a) réparties et fixées sur chaque profilé longitudinal (104a), la face supérieure de chaque colonnette (110a) servant d'appui à la surface inférieure d'une colonnette d'une unité empilable supérieure, et, la face inférieure de chaque colonnette (110a) venant en appui sur la face supérieure d'une colonnette (110b) de l'unité empilable inférieure (100b) ou sur un plancher.

2. Unité empilable (100a) selon la revendication 1, **caractérisée en ce que** chaque profilé longitudinal (104a) a une section en 'C' et **en ce que** chaque colonnette (110a) est fixée à chaque extrémité horizontale (204a, 206a) dudit profilé longitudinal (104a).

3. Unité empilable (100a) selon l'une des revendications 1 ou 2, **caractérisée en ce qu'**elle comprend au moins deux plots d'alignement (112a) et, pour chaque plot d'alignement (112a), un orifice d'alignement, chaque plot d'alignement (112a) étant prévu pour s'insérer dans un orifice d'alignement d'une deuxième unité empilable lors de l'empilement, et, chaque orifice d'alignement étant prévu pour recevoir un plot d'alignement d'une troisième unité empilable lors de l'empilement.

4. Unité empilable (100a) selon la revendication 3, **caractérisée en ce que** chaque plot d'alignement (112a) prend la forme d'un cylindre vertical dont la base est fixée sur le cadre et dont l'extrémité libre est conique.

## Claims

1. Stackable unit (100a), comprising:
- two longitudinal profiles (104a),
- two transverse profiles (102a) which are connected to the longitudinal profiles (104a) to form a frame,
- at least one channel member (106a) whose longitudinal axis is parallel to the longitudinal profiles (104a) and of which each end is fixed to the transverse profiles (102a), and
- there is fixed in place below each channel member (106a) a cover (108a) whose longitudinal axis is parallel to the longitudinal profiles (104a), such that, when the stackable unit (100a) is stacked on another, identical, stackable unit (100b), each cover (108a) of the said stackable unit (100a) covers a channel member (106b) of the stackable unit (100b) in the lower position,
the stackable unit (100a) being **characterised in that** it comprises at least two small vertical columns (110a) which are distributed along and fixed to each longitudinal profile (104a), the top face of each small column (110a) acting as a support for the bottom face of a small column belonging to a stackable unit above it, and the bottom face of each small column (110a) resting on the top face of a small column (110b) belonging to the stackable unit (100b) below it, or on a floor.

2. Stackable unit (100a) according to claim 1, **characterised in that** each longitudinal profile (104a) is C-shaped in cross-section and **in that** each small column (110a) is fixed to each horizontal edge (204a, 206a) of the said longitudinal profile (104a).

3. Stackable unit (100a) according to either of claims 1 and 2, **characterised in that** it comprises at least two locating spigots (112a) and, for each locating spigot (112a), a locating opening, each locating spigot (112a) being intended to insert itself in a locating opening in a second stackable unit at the time of stacking, and each locating opening being intended to receive a locating spigot of a third stackable unit at the time of stacking.

4. Stackable unit (100a) according to claim 3, **characterised in that** each locating spigot (112a) takes the form of a vertical cylinder whose base is fixed to the frame and whose free end is conical.

## Patentansprüche

1. Stapelbare Einheit (100a), umfassend:
- zwei Längsprofile (104a),
- zwei Querprofile (102a), die mit den Längsprofilen (104a) verbunden sind, um einen Rahmen zu bilden,
- mindestens eine Ablaufrinne (106a), deren Längsachse parallel zu den Längsprofilen (104a) verläuft und deren Enden jeweils an den Querprofilen (102a) befestigt sind, und
- wobei unter jeder Ablaufrinne (106a) ein Deckel (108a) befestigt ist, dessen Längsachse parallel zu den Längsprofilen (104a) so verläuft, dass dann, wenn die stapelbare Einheit (100a) auf einer identischen anderen stapelbaren Einheit (100b) gestapelt wird, jeder Deckel (108a) der stapelbaren Einheit (100a) eine Ablaufrinne (1 06b) der unteren stapelbaren Einheit (100b) bedeckt,
wobei die stapelbare Einheit **dadurch gekennzeichnet ist, dass** sie mindestens zwei vertikale Säulen (110a) umfasst, die auf jedem Längsprofil (104a) verteilt und befestigt sind, wobei die Oberseite jeder Säule (110a) als Auflage für die Unterseite einer Säule einer oberen stapelbaren Einheit dient und die Unterseite jeder Säule (110a) auf der Oberseite einer Säule (110b) der unteren stapelbaren Einheit (100b) oder auf einem Boden zur Auflage kommt.

2. Stapelbare Einheit (100a) nach Anspruch 1, **dadurch gekennzeichnet, dass** jedes Längsprofil (104a) einen C-förmigen Querschnitt aufweist, und **dadurch**, dass jede Säule (110a) an jedem horizontalen Ende (204a, 206a) des Längsprofils (104a) befestigt ist.

3. Stapelbare Einheit (100a) nach einem der Ansprüche 1 oder 2, **dadurch gekennzeichnet, dass** sie mindestens zwei Ausrichtstifte (112a) und für jeden Ausrichtstift (112a) eine Ausrichtöffnung aufweist, wobei jeder Ausrichtstift (112a) dafür vorgesehen ist, während des Stapelvorgangs in eine Ausrichtöffnung einer zweiten stapelbaren Einheit einzugreifen, und wobei jede Ausrichtöffnung dafür vorgesehen ist, während des Stapelvorgangs einen Ausrichtstift einer dritten stapelbaren Einheit aufzunehmen.

4. Stapelbare Einheit (100a) nach Anspruch 3, **dadurch gekennzeichnet, dass** jeder Ausrichtstift (112a) die Form eines senkrechten Zylinders annimmt, dessen Basis auf dem Rahmen befestigt ist und dessen freies Ende kegelförmig ist.
